# FASCICULE DE BREVET EUROPEEN

(11) **EP 3 825 726 B1**
(45) Date de publication et mention de la délivrance du brevet: **16.09.2026**
(21) Numéro de dépôt: 20201054.2
(22) Date de dépôt: 09.10.2020
(51) Int. Cl.: G01S 13/76, G01S 13/78, G01S 13/933

(54) **PROCÉDÉ DE DÉTECTION DE CONFLITS DE CODE II/SI D'IDENTIFICATION DE RADAR MODE S AVEC DES RADARS ENVIRONNANTS, ET RADAR SECONDAIRE METTANT EN OEUVRE UN TEL PROCÉDÉ**
VERFAHREN ZUR ERKENNUNG VON II/SI-IDENTIFIZIERUNGSCODE KONFLIKTEN DES RADAR-MODUS S UND UMLIEGENDEN RADARGERÄTEN, UND SEKUNDÄRRADAR ZUR UMSETZUNG DIESES VERFAHRENS
METHOD FOR DETECTING CONFLICTS OF IDENTIFICATION CODE II/SI OF MODE S RADAR WITH SURROUNDING RADARS AND SECONDARY RADAR IMPLEMENTING SUCH A METHOD

(30) Priorité: 25.11.2019 FR 1913154
(43) Date de publication de la demande: 26.05.2021
(73) Titulaire: THALES, 92190 Meudon (FR)
(72) Inventeur: BILLAUD, Philippe, 91470 LIMOURS (FR)
(74) Mandataire: Atout PI Laplace

(56) Documents cités:
- EP-A1- 3 502 735
- GB-A- 2 477 103
- GB-A- 2 518 364
- EUROCONTROL: "Principles of Mode S Operation and Interrogator codes", INTERNET CITATION, 18 March 2003 (2003-03-18), XP002454133, Retrieved from the Internet <URL:http://www.eurocontrol.int/msa/gallery/content/public/documents/Principles%20of%20Mode%20S%20Operation%20and%20interrogator%20Codes%202.pdf> [retrieved on 20071009]
- KOGA T ET AL: "Results of validation of SSR mode S interrogator identifier code coordination", DIGITAL AVIONICS SYSTEMS CONFERENCE, 2009. DASC '09. IEEE/AIAA 28TH, IEEE, PISCATAWAY, NJ, USA, 23 October 2009 (2009-10-23), pages 4.D.6 - 1, XP031575899, ISBN: 978-1-4244-4078-8
- KIM EUIHO ET AL: "Blended secondary surveillance radar solutions to improve air traffic surveillance", AEROSPACE SCIENCE AND TECHNOLOGY, ELSEVIER MASSON, FR, vol. 45, 27 May 2015 (2015-05-27), pages 203 - 208, XP029257533, ISSN: 1270-9638, DOI: 10.1016/J.AST.2015.05.018

## Description

L'invention se situe dans le domaine du contrôle du trafic aérien (ATC) pour lequel la performance du radar est fondamentale tout particulièrement au niveau de la détection des aéronefs en mode S, un taux de réussite de l'ordre de 99% étant attendu.

Le contrôle aérien est principalement basé sur le radar mode S dont la fiabilité de détection et décodage est largement reconnue. Les performances d'un radar mode S sont notamment liées au fait que les radars sont désormais identifiés par les aéronefs à partir de leur code II/SI (Interrogator Identifier). Pour limiter la pollution électromagnétique et ainsi accroître la fiabilité des transactions d'un radar, le radar Mode S verrouille les cibles qu'il gère, dans son volume de couverture de responsabilité, sur son identité II/SI afin que ces cibles ne répondent plus aux interrogations Mode S non sélectives.

Un problème technique à résoudre est notamment est le suivant. En cas de chevauchement de couverture entre radars proches, il faut que les radars aient des identités II/SI différentes. Dans le cas contraire, où deux radars proches partagent un même code II/SI, chacun des deux radars ne voit pas les cibles que l'autre radar aura verrouillées en premier. Il en résulte une grande défaillance en matière de sécurité.

Dans l'art antérieur, il est proposé différentes solutions pour détecter la présence d'avions dans la couverture d'un radar ne répondant pas aux appels généraux de ce radar car verrouillés par un radar proche utilisant le même code Il/SI. Une première solution est divulguée dans le document GB201000946. Par concept, cette solution ne fonctionne qu'avec des avions équipés en ADS-B_out. Elle nécessite que le radar soit équipé ou soit associé à un récepteur ADS-B_in local avec lequel il communique.

Une autre solution est proposée dans le document GB201316553. Elle consiste à détecter un conflit de code Il/SI entre senseurs proches en comparant les portées de détection entrante et sortante du radar. En effet, un avion sortant de la couverture d'un radar A est géré en mode sélectif, donc jusqu'à la limite de couverture opérationnelle du radar A, alors qu'un avion entrant dans la couverture du radar A (venant de la couverture d'un radar B) n'est vu par la station du radar A que lorsque l'autre radar B arrête de le verrouiller. S'il y a chevauchement de la couverture entre les radars A et B, cela se produit donc à l'intérieur de la couverture du radar A donc à plus courte distance que la limite de sa couverture.

Le document « Principles of Mode S Operation and Interrogator codes » (Eurocontrol) présente les principes d'opération du mode S et des codes interrogateurs. Les documents « Results of validation of SSR mode S interrogator identifier code coordination » (Koga et al.) et « Blended secondary surveillance radar solutions to improve air traffic surveillance » (Kim Euhio et al.) adressent les problèmes de conflits de code II. Le document EP3502735, qui décrit un procédé de mesure de diagramme d'antenne d'un radar secondaire, ne dévoile pas de procédé de détection de conflit de code Il/SI.

L'art antérieur est donc limité dans la détection des zones à conflit de code II/SI :
- Soit par l'équipement (ADS-B_out) nécessaire au avions pour être vus ;
- Soit par le constat a posteriori de l'écart entre la couverture entrante et sortante ;
- Enfin, ne proposant pas de moyen de contournement du conflit de code Il/SI pour détecter les avions.
Une autre approche normée au niveau de l'utilisation des stations mode S consiste à coordonner des radars utilisant le même identifiant Il/SI en cluster SCN (Surveillance Co-ordination Network), ce qui nécessite une infrastructure sol transfrontalière pour qu'ils s'échangent volontairement la position des cibles dans leurs zones communes, par un réseau au sol de haute fiabilité. En plus de l'inconvénient de recourir à une structure complexe, on ne résout pas le problème des erreurs humaines.

Un but de l'invention est notamment de pallier les problèmes liés aux partages de codes Il/SI entre radars proches sans les inconvénients de l'art antérieur. A cet effet, l'invention a pour objet un procédé de détection de conflits de code Il/SI d'identification de radars environnant un radar secondaire mode S selon la revendication 1.

L'invention a également pour objet un radar selon la revendication 4.

D'autres caractéristiques et avantages de l'invention apparaîtront à l'aide de la description qui suit, faite en regard de dessins annexés qui représentent :
[Fig.1] La figure 1, un exemple de synoptique d'un radar mode S selon l'art antérieur ;
[Fig.2] La figure 2, un exemple de synoptique d'un radar mode S apte à mettre en œuvre l'invention ;
[Fig.3] La figure 3, une illustration des étapes pour la mise en œuvre du procédé selon l'invention ;
[Fig.4] La figure 4, une illustration de la portée opérationnelle et de la portée étendue d'un radar secondaire à une altitude donnée ;
[Fig.5] La figure 5, une illustration du chevauchement de portées entre deux radars secondaires ;
[Fig.6a] La figure 6a une illustration de la pollution électromagnétique d'un radar environnant sur un radar de référence ;
[Fig.6b] La figure 6b, réciproquement, une illustration de la pollution électromagnétique du radar de référence sur le radar environnant ;
[Fig.7] La figure 7, une illustration de la découpe d'une zone de chevauchement en plusieurs sous-zones selon les réponses que les cibles génèrent avec les 2 radars ;
[Fig.8] La figure 8, une présentation des réponses échangées par les cibles avec les radars R1 et R2 dans la zone de chevauchement par sous-zones ;
[Fig.9] La figure 9, une présentation de la zone azimut de conflit de code Il/SI du radar R1 en fonction des réponses échangées dans la zone de chevauchement par sous-zone ;
[Fig.10a] La figure 10a, une illustration de la détection de plots DF11 hors couverture opérationnelle du radar de référence en accroissant la durée des périodes AC ;
[Fig.10b] La figure 10b, une illustration de la détection de plots DF11 hors couverture opérationnelle du radar de référence en parallèle avec la période suivante sans accroitre la durée des périodes AC ;
[Fig.11] La figure 11, une illustration de l'asynchronisme des fruits dus à un radar environnant ;
[Fig.12] La figure 12, une illustration de la recherche et de la prélocalisation de cibles en zone de conflit de code Il/SI par analyse temporelle et azimut des fruits provoqués par le radar environnant ;
[Fig.13] La figure 13, une illustration de la détection de cibles verrouillées sans perturbation opérationnelle du radar de référence ;
[Fig.14] La figure 14, une autre illustration du procédé selon l'invention.

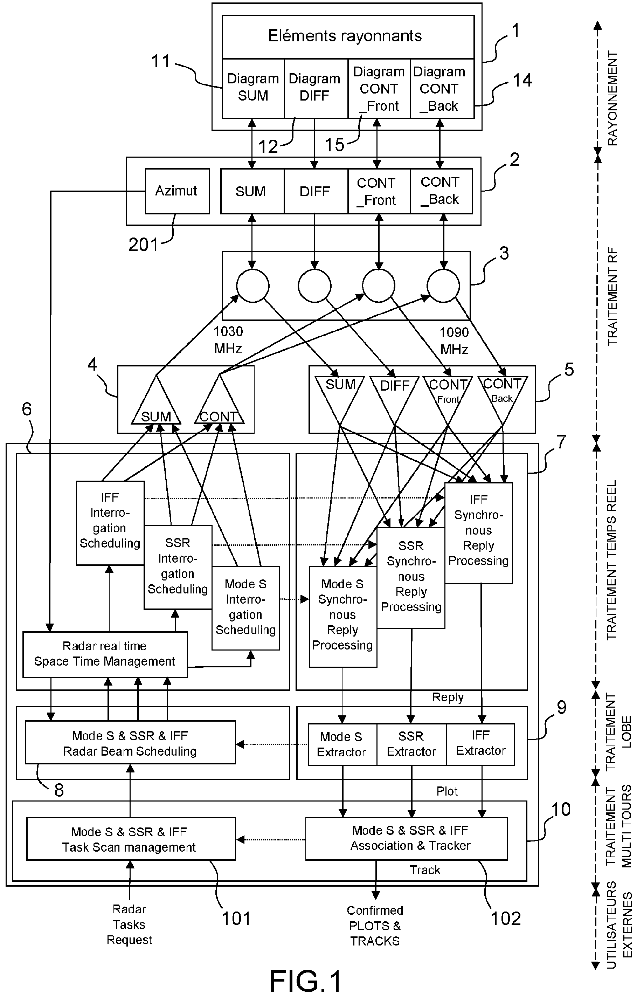

En regard de la figure 1 qui représente un exemple de synoptique d'un radar Mode S, on rappelle les principes d'un tel radar. Le principe du radar secondaire Mode S (dont les interfaces avec le transpondeur sont définis en détail par l'ICAO Annexe 10 vol.4) consiste à :
- émettre des interrogations sélectives :
   - soit indiquant le destinataire : une seule cible désignée par son adresse Mode S ;
   - soit indiquant l'identifiant de l'émetteur ;
- recevoir des réponses sélectives :
   • soit indiquant l'identifiant de l'émetteur : la même adresse Mode S de la cible ;
   • soit indiquant le destinataire : l'identifiant de l'interrogateur ;
- dont le contenu principal dépend du message :
   ∘ en phase d'acquisition (transitoire en début de piste)
      ▪ **DF11** : adresse Mode S de la cible ;
   ∘ en ELS (Elementary Surveillance)
      ▪ **DF4** : altitude ;
      ▪ **DF5** : identité (code A) ;
   ∘ en EHS (EnHanced Surveillance)
      ▪ **DF20 :** altitude + registre BDS dont le numéro est connu en autre par l'interrogation qui l'a sollicité ;
      ▪ **DF21** : identité (code A) + registre BDS dont le numéro est connu en autre par l'interrogation qui l'a sollicité.

Dans son emploi usuel, le radar secondaire fonctionne en mode synchrone, c'est-à-dire qu'il émet une interrogation et attend une réponse en cohérence avec celle-ci, ce qui lui permet de localiser par mesure (en azimut et distance) et d'identifier (par l'adresse Mode S) la cible.

Pour effectuer cette tâche avec performance, le radar est équipé d'une antenne 1 (figure 1) ayant plusieurs diagrammes 11, 12, 14, 15 dont les rôles sont classiquement :
- un diagramme somme 11, noté par la suite SUM, pour interroger et détecter la réponse synchrone de la cible ;
- un diagramme différence 12, noté DIFF, pour localiser finement la cible dans le faisceau SUM ;
- un premier diagramme de contrôle 15, noté CONT_Front, pour bloquer et réjecter les réponses issues de cibles face à l'antenne non présentes dans le faisceau principal de SUM ;
- un deuxième diagramme de contrôle 14, noté CONT_back, pour bloquer et réjecter les réponses issues de cibles au dos à l'antenne (donc forcément non présentes dans le faisceau principal de SUM).

Selon les missions et donc les performances attendues du radar l'antenne peut être :
- de plusieurs diagrammes :
   - 4 diagrammes : SUM, DIFF, CONT_Front & CONT_Back ;
   - 3 diagrammes : SUM, DIFF, CONT (CONT_Front et CONT_Back sont regroupés au niveau de l'antenne) ;
   - 2 diagrammes : SUM, DIFF/CONT (DIFF, CONT_Front & CONT_Back sont regroupés au niveau de l'antenne) ;
- de dimensions adaptées :
   - en largeur :
      ∘ ayant une grande largeur pour avoir un faisceau principal fin apportant un fort gain ainsi que pour être sélective et précise en azimut ;
   - en hauteur :
      ∘ ayant une grande hauteur, de type Large Vertical Aperture (LVA) apportant du gain et une protection contre les réflexions sol (principalement en ATC) ;
      ∘ ayant une petite hauteur, de type « poutre » apportant une mobilité (principalement utilisée en IFF).
Alors que les diagrammes SUM et DIFF sont classiquement fins avec des lobes à 3dB entre 2,4° à 10°, les diagrammes CONT_Front et CONT_Back cherchent à couvrir pratiquement 180° chacun.
L'antenne peut aussi être :
- de diagramme fixe, dite « mécanique » et tournante ;
- de diagramme évolutif, à balayage électronique, dite « AESA » fixe ou tournante.

Dans la suite de la description, on décrit la configuration antennaire la plus complète, soit 4 diagrammes en antenne tournante, sachant que les autres configurations se traitent de façon similaire quel que soit le nombre de diagrammes d'antenne exploités que l'antenne soit tournante ou fixe. Pour simplifier la description, on pourra cependant utiliser la configuration à 3 diagrammes en utilisant CONT en tant que regroupement de CONT_Front et CONT_Back.

L'antenne 1 assure le rayonnement des interrogations à 1030 MHz et la réception des réponses en retour à 1090 MHz, selon les quatre diagrammes : SUM, DIFF, CONT_Front et CONT_Back, ou trois diagrammes (SUM, DIFF, CONT) ou selon deux diagrammes (SUM, DIFF/CONT).

Un joint tournant 2 et des câbles de descente d'antenne, pour une antenne tournante, assurent :
- le couplage RF des signaux transmis à 1030 MHz et reçus à 1090 MHz indépendamment pour les quatre diagrammes entre la partie tournante et la partie fixe du radar ;
- la diffusion de la position en azimut 201 de l'axe du lobe principal de l'antenne.

Un traitement RF comporte :
- un duplexeur ou circulateur 3 assurant le couplage RF entre les signaux transmis à 1030 MHz et reçus à 1090 MHz indépendamment pour les quatre diagrammes ;
- un émetteur 4 assurant :
   - la transmission des interrogations à 1030 MHz sur le diagramme SUM ;
   - le blocage des transpondeurs en dehors du lobe SUM à 1030 MHz par les diagrammes CONT_Front et CONT_Back ;
   - ceci pour les différents protocoles secondaires : IFF, SSR et Mode S ;
- un récepteur 5 assurant la réception des réponses à 1090 MHz sur les quatre diagrammes SUM, DIFF, CONT_Front et CONT_Back, et le calcul de l'écartométrie pour les différents protocoles secondaires : IFF, SSR et Mode S.

Un traitement temps réel comporte :
- une gestion spatio-temporelle 6 assurant la gestion temps réel des périodes d'interrogations et d'écoutes associées pour les différents protocoles secondaires : IFF, SSR et Mode S ;
- un traitement du signal 7 assurant :
   - le traitement des réponses dans les périodes d'écoutes associées aux interrogations pour les différents protocoles secondaires : IFF, SSR et Mode S ;
   - la détection et le décodage des réponses synchrones dans le lobe principal de l'antenne en exploitant les quatre diagrammes :
      ∘ SUM : pour détecter les réponses reçues dans le lobe principal ;
      ∘ DIFF : pour localiser finement en azimut les réponses reçues dans le lobe principal SUM et éventuellement pour la discrimination de réponses emmêlées ;
      ∘ CONT_Front et CONT_Back : pour réjecter les réponses reçues sur les lobes secondaires de SUM et DIFF dans ce cas d'une détection dans le lobe principal de SUM.

Un traitement dans le lobe principal de l'antenne comporte :
- une gestion 8 des cibles présentes dans le lobe, assurant :
   - la préparation des transactions (interrogations et réponses) à effectuer dans le prochain lobe pour les différents protocoles secondaires IFF, SSR et Mode S ;
   - la gestion des périodes IFF, SSR, Mode S « All Call » et Mode S « Roll Call » dans le lobe ;
   - le placement dynamique des interrogations et réponses sélectives Mode S dans la future période « Roll call » en fonction de l'état des transactions venant d'être effectuées et des nouveaux avions entrants dans le lobe ;
- des extracteurs 9 assurant la constitution de plots pour chacun des différents protocoles secondaires IFF, SSR et Mode S, à partir des réponses synchrones reçues dans le lobe selon le protocole employé lors des interrogations.

Un traitement multi tours 10 comporte :
- une gestion 101 des tâches Mode S à effectuer avec les cibles dans la couverture, assurant la prédiction de positions des cibles (rendez-vous d'antenne) et la préparation des tâches à effectuer associées à ces positions selon les demandes internes, externes et l'état des transactions des tours précédents ;
- une association des plots et un pistage 102 des cibles dans la couverture assurant le pistage des cibles pour améliorer les performances (élimination des faux plots, contrôle de données décodées notamment) et pour prédire la position future de celles-ci principalement, mais pas seulement, en Mode S.

Une interface avec les utilisateurs permet la prise en compte par le radar de différentes requêtes et la visualisation des plots et des poursuites de cibles.

Ayant rappelé le fonctionnement d'un radar secondaire Mode S et avant de décrire plus en détail l'invention on en présente ci-après le principe de mise en œuvre. La solution selon l'invention analyse l'environnement d'un radar A en exploitant les fruits que reçoit ce radar A ou plutôt qu'il ne reçoit plus en cas de conflit de code Il/SI. Les fruits (acronyme de l'expression « False Reply Unsychronised in Time) sont des réponses asynchrones non sollicitées par le radar. Ces fruits sont :
- soit sollicitées par un autre senseur (autre Radar, WAM, TCAS, ...) partageant le même espace ;
- soit automatiquement générés par la cible elle-même (ADS-B, ..).
Les fruits sont caractérisés par :
- l'adresse mode S de la cible ;
- la puissance reçue selon les diagrammes de l'antenne ;
- l'azimut de l'antenne ;
- l'heure radar de leur réception.

Ces fruits mode S sont des messages (réponses Mode S de différents types ou Downlink Format_DF) que les aéronefs échangent avec les autres radars R2, R3, R4 ... Selon le type de message, ce dernier informe de l'identité de l'aéronef et quelquefois, selon la nature de la réponse, de l'identité d'un autre radar (R2, R3, R4 ...) avec lequel l'aéronef dialogue. Si l'aéronef est référencé par ce radar R1 en utilisant son adresse mode S, aussi présente dans les Fruits, cela permet de localiser, par analyse géographique, une zone de l'espace présentant un conflit de code Il/SI pour le radar R1 avec le radar R2, quasiment en temps réel.

En effet, en cas d'emploi du même code Il/SI par des radars proches R1 et R2, partageant une zone de couverture commune, on observe les écarts au sein de la distribution des fruits dans l'environnement comparé au fonctionnement avec des codes Il/SI différents. Ces écart sont notamment les suivants :
- aucune cible dans la zone commune en RF (celle au delà de la zone opérationnelle) ne génère de fruits DF11 car les deux radars R1 et R2 verrouillent les avions sur le même code Il/SI ;
- les cibles dans chaque zone non commune de couverture de chaque radar R1 ou R2 génère des fruits DF11 de meme code Il/SI ;
   - car chaque radar R1, R2, verrouille les avions dans sa couverture sur son code Il/SI qui est le même que celui de l'autre radar alors que les avions en dehors des deux zones de couvertures des deux radars R1, R2 génèrent des fruits DF11 avec le code Il/SI des deux radars R1, R2 ;
   - car ils ne sont plus verrouillés par aucun des deux radars, ni R1, ni R2.

L'ensemble de cette analyse permet d'indiquer et de localiser en azimut de R1 (respectivement de R2) une zone présentant la présence d'un conflit de code II/SI entre les radars R1 et R2.
De plus dans la partie commune les avions génèrent des fruits :
- DF4 donnant l'altitude,
- DF5 donnant l'identité -code A-,
- DF20 donnant l'altitude et le registre BDS requis,
- DF21 donnant l'identité et le registre BDS requis
   de transactions Mode S opérationnelles Elementary Surveillance (ELS) ou EnHanced Surveillance (EHS) du radar R2 que le radar R1 peut détecter :
- permettant la détection d'une cible mode S non encore connue par le radar R1.

La génération quasi synchrone (analyse temporelle) des fruits DF4/5/20/21 d'une telle cible avec les fruits DF11 d'autres cibles avec le même radar R2 permet en quelques tours :
- d'isoler les fruits DF4/5/20/21 de chaque cible avec le radar R2 ;
- de pré-localiser en azimut du radar A une nouvelle cible non encore détectée dans la zone de conflit II/SI :
   - soit par analyse temporelle en fonction de l'écart temporel entre les fruits DF4/5/20/21 de cette cible avec les fruits DF11 générés par les autres cibles dont la position est connue par R1 ;
   - soit par la signature que le radar R1 affecte à chaque fruit DFxx selon l'énergie reçue du Fruit sur chaque diagramme d'antenne (SUM, DIFF, CONT) - voir brevet FR N° 1800657 pour le détail de ce principe appliqué à des squitters ADS-B (DF17).

Le conflit de code Il/SI dans la zone commune avec R2 rend inefficace l'écoute de réponse DF11 à un appel général UF11 du radar R1, il reste néanmoins utile pour l'acquisition des nouvelles cibles plus proches. Aussi, pour localiser précisément en distance (et mieux en azimut) cette cible, le radar R1 va, uniquement dans l'azimut pré-localisé de la cible, compléter ses périodes All Call par une 3ème interrogation sélective avec l'adresse Mode S de la cible sur une portée d'écoute en distance assez grande (puisque les fruits de cette cible étant asynchrone n'informent pas sur sa distance). Il est possible de rajouter une 3^{ième} interrogation Mode S (UF4 ou UF5) dans la même période All Call ayant déjà une interrogation Mode S non sélective (UF11) et une interrogation SSR (MA/MC/M1/M2) car ces 3 interrogations sont destinées à des cibles différentes et de plus les réponses synchrones associées sont de formats différents évitant ainsi toute erreur d'interprétation.

Pour réduire la dimension de la fenêtre d'écoute sélective, la distance de la cible peut être évaluée à partir de la puissance reçue dans les fruits de la cible. Pour cela, à chaque fruit reçu de la cible une fois déterminé l'azimut de celle-ci on estime par calcul la distance de la cible en tenant compte du gain d'antenne au gisement du fruit reçu. Cela permet notamment, quasiment en temps réel, d'acquérir et de localiser précisément des cibles bien que verrouillées aux appels généraux UF11 de R1 par le radar R2 puis de les gérer, par la suite, comme toutes les autres cibles en transactions sélectives lors des périodes Roll Call (RC).

Comme le montrera la suite de la description, l'invention présente au moins les avantages suivants :
- l'invention s'appuie sur le concept même de l'emploi du code Il/SI à savoir le verrouillage des cibles Mode S : il est donc applicable dès qu'une cible est concernée donc est mode S sans requérir d'autres équipements à bord (comme par exemple ADS-B_out) ;
- l'analyse des fruits de toutes les cibles dans la zone permet de définir la zone de conflit de code Il/SI avec plus de précision géographique (grâce à la position de toutes ces cibles) et ce très rapidement même si le nombre de cibles est élevé ;
- l'analyse des fruits d'une cible avec le radar R2 permet de la pré-localiser celle-ci en azimut ;
- l'Interrogation sélective dans les « All Call » avec une grande tolérance en distance de cette cible à l'azimut pré localisé permet de la détecter précisément sans influer sur les performances opérationnelles du radar R1.

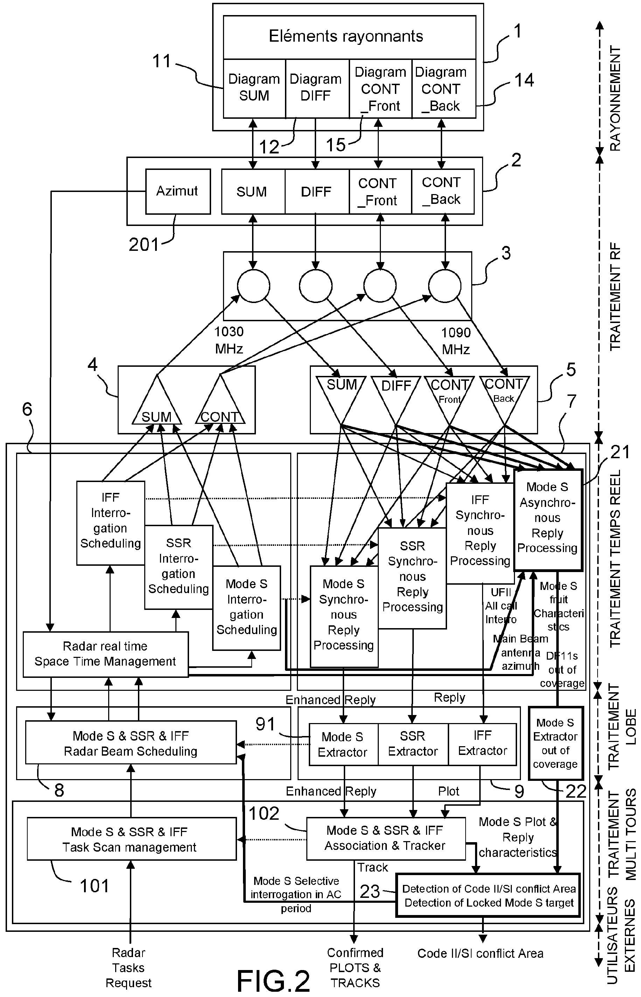

On revient au synoptique du radar mode S présenté à la figure 1 avec les évolutions pour la mise en œuvre de l'invention. Le nouveau synoptique, apte à mettre en œuvre l'invention, est présenté en figure 2. Les principaux composants et traitements ajoutés propres à l'invention, appliquée à un radar mode S ayant une antenne à 4 diagrammes, sont représentés en traits gras sur la figure 2.

Alors que le fonctionnement d'un radar mode S est synchrone, les traitements ajoutés pour l'invention ne sont pas liés à l'émission et n'exploitent que la position en azimut de l'axe du lobe principal de l'antenne. La plupart des éléments restent inchangés, vérifiant en cela à la fois :
- La non intrusion de l'invention dans le fonctionnement opérationnel du radar mode S ;
- L'utilisation des mêmes éléments que ceux que le radar exploite :
   - En aérien au sens large : antenne, joint tournant, câbles de descente d'antenne, les duplexeurs ;
   - En traitement : le récepteur.
Cela permet notamment une corrélation des réponses synchrones et asynchrones issues des mêmes avions.
Les principales fonctions ajoutées sont décrites ci-après.

Dans le traitement temps réel, et plus particulièrement dans le traitement du signal :
- ajout du traitement permanent des réponses asynchrones mode S 21 (indépendamment des périodes d'écoutes associées aux interrogations) assurant la détection et le décodage des réponses asynchrones en exploitant séparément mais également les 4 diagrammes SUM, DIFF, CONT_Front et CONT_Back :
   - pour détecter toutes les réponses reçues : Asynchones et Synchrones ;
   - pour décoder les réponses de tout type (DF4/5/11/20/21), les données du message et surtout en extraire l'adresse Mode S ;
   - pour enrichir chaque réponse décodée de ses caractéristiques : heure de détection, azimut du lobe principal de l'antenne lors de la détection, puissances reçues sur SUM, DIFF, CONT_Front et CONT_Back ;
- enrichissement des réponses synchrones par la puissance mesurée sur SUM, DIFF, CONT_Front et l'azimut antenne ;
- détection des réponses synchrones hors de la couverture opérationnelle du radar.

Dans le traitement dans le lobe principal, on ajoute l'extracteur 22 Mode S de plots DF11 en dehors de la portée opérationnelle, l'extraction de plots DF11 étant effectuée en dehors de cette portée pour localiser et identifier des cibles par leur adresse mode S.

Dans le traitement multi-tours :
- ajout du traitement 23 de Détection de zone de Conflit de Code Il/SI ;
   - association des fruits (réponse Asynchrone) avec les plots synchrones de la couverture (portée opérationnelle et au-delà) ;
   - analyse géographique des sources de fruits DF11_R2 (DF11_R2 signifiant que le fruit DF11 est une réponse asynchrone dont la source est un radar R2, c'est-à-dire une réponse asynchrone non sollicitée par R1_ à la suite d'un appel général émis par ce radar R2) ;
- ajout de la Détection et Localisation précise 23 de cible verrouillée par R2 en zone de conflit de code II/SI :
   - isolation de la présence d'une cible non détectée par le radar R1 dans la zone de conflit par analyse des fruits DF4/5/20/21_R2 (DF4/5/20/21_R2 signifiant que le fruit est de type DF4 ou DF5 ou DF20 ou DF21 généré par une cible lors de sa gestion opérationnelle par radar R2) ;
   - évaluation de sa pré-localisation en azimut vis-à-vis de R1 dans la zone de couverture en conflit ;
   - détection et localisation précise de cette cible en distance et azimut afin de poursuivre ensuite sa surveillance comme toutes les autres cibles.

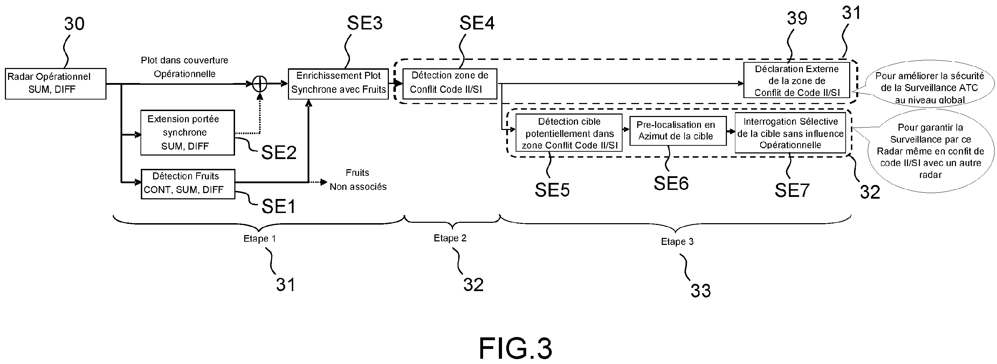

La figure 3 illustre les différentes étapes pour la mise en œuvre de l'invention, réalisées par un radar opérationnel 30. Ce dernier assure sa mission usuelle de surveillance dans sa zone de responsabilité en couverture opérationnelle (ELS ou EHS), c'est-à-dire détecter et localiser toutes les cibles mode S possibles via leurs réponses synchrones enrichies. Les réponses synchrones, sollicitées par le radar, sont reçues à l'aide des diagrammes sélectifs en azimut SUM et DIFF.
On décrit ci-après les trois étapes mettant en œuvre l'invention.

La première étape 31 comporte trois sous-étapes SE1, SE2, SE3. Dans une première sous-étape SE1, le radar 30 détecte les fruits. Ces réponses asynchrones, non sollicitées par le radar, sont reçues via les quatre diagrammes SUM, DIFF, CONT_front et CONT_back. Selon l'invention, le traitement du radar exploite notamment les fruits dont le format est identique à celui des réponses synchrones, tant en signal RF qu'en structure de réponse.

Pour exploiter les fruits, toujours en sous-étape SE1, on ajoute dans le traitement une chaine de détection et de décodage de ces réponses asynchrones qu'un radar classique rejette usuellement. Ces réponses asynchrones sont qualifiées avec les attributs usuels d'une réponse, ces attributs étant notamment les suivants :
- Heure de détection ;
- Azimut de l'antenne au moment du fruit ;
- Adresse mode S du transpondeur émetteur ;
- Contenu du message ;
- Puissance du fruit selon chaque diagramme de l'antenne.

Selon la distance de la cible au radar, le fruit peut être détecté sur plusieurs diagrammes simultanément. Dans ces conditions, lors de cette première étape, les détections multiples (à la même heure) sont concaténées pour n'assurer qu'un seul message de réponse asynchrone par fruit. A ce niveau, on ne distingue pas la source du fruit, qui peut être :
- Soit sollicité par un autre senseur (autre radar, WAM, TCAS ...) partageant le même espace ;
- Soit automatiquement généré par la cible elle-même (ADS-B, ...), cette éventualité n'étant pas exploitée par l'invention.

Dans la sous-étape SE2, on étend la couverture de détection du radar (sachant que la couverture opérationnelle est souvent réglée par l'utilisateur comme inférieure à sa portée maximale garantie) à sa portée bien supérieure, voire maximale en détection synchrone, afin d'assurer une zone de mesure permettant de définir la zone de conflit de code Il/SI. Les réponses synchrones supplémentaires ainsi obtenues (avec les mêmes interrogations opérationnelles d'appels généraux UF11 du radar donc sans influence sur le fonctionnement opérationnel du radar) sont traitées comme les autres réponses synchrones de la couverture du radar en période All Call (AC) pour faire des plots qui ont donc les attributs élémentaires usuels d'un plot mode S basique tels que notamment :
- Heure de détection du Centre Plot ;
- Adresse mode S du transpondeur émetteur ;
- Azimut du centre plot;
- Distance du plot ;
- pour chaque réponse ayant constitué le plot ;
   - Heure de détection (classiquement de l'ordre de 50ns) ;
   - Azimut de l'antenne;
   - Succès ou échec de l'interrogation (réponse reçue ou non) ;
   - Dépointage dans le lobe ;
   - Contenu du message;
   - Puissance de la réponse selon chaque diagramme de l'antenne (SUM, DIFF et CONT_Front).

Dans la sous-étape SE3, on effectue l'association des fruits aux plots mode S de la couverture étendue du radar. Pour chaque cible localisée dans l'espace de couverture opérationnel ou étendu du radar par le radar via des interrogations sélectives ayant générées des réponses synchrones (DF4/5/11/20/21), l'invention associe à celle-ci les fruits qu'elle a générés (sur la base de l'adresse mode S unique du transpondeur comme identifiant de cible) :
- soit entre deux détections synchrones successives en Mode S (proche du tour) ;
- soit sur une base tour, par exemple.
Le fruit étant par nature asynchrone on détermine la position de la cible au moment de la détection du fruit en interpolant la position de la cible à partir de sa trajectoire établie par le radar dans ses fonctions opérationnelles à l'heure de réception du fruit.

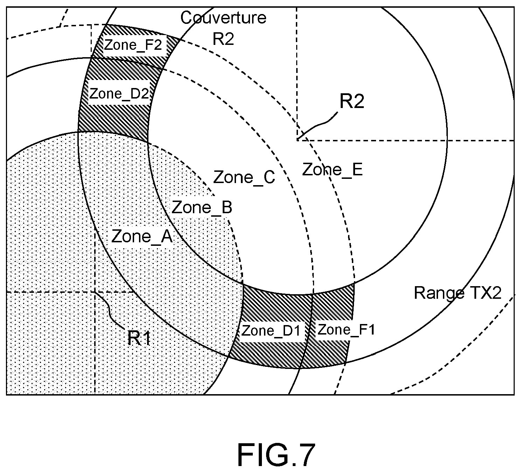

Dans la deuxième étape 32, le radar effectue la détection et la caractérisation d'une zone de conflit de code Il/SI potentiel par l'analyse de différentes zones géographiques entre les deux radars. Cette opération correspond à une sous-étape SE4 dans laquelle le radar effectue cette détection et caractérisation par l'analyse, pour différentes zones géographiques entre les deux radars :
- De la présence de fruits DF11 des cibles dans deux zones D1 et D2 encadrant la zone de conflit de code Il/SI (zones D1 et D2 de la figure 7) ;
- De l'absence de fruit DF11 des cibles dans la zone A de couverture opérationnelle non chevauchante du radar R2 (zones A de la figure 7) ;
- Du code Il/SI associé aux fruits identiques à celui du radar R1 dans les zones D1 et D2 ;
- De l'absence de plot synchrone DF11 au-delà de la couverture opérationnelle du radar dans une zone C (zones C de la figure 7).
En cas de confirmation de conflit de code Il/SI, la zone concernée est transmise par le radar à la supervision ATM pour faire corriger le problème.

La troisième étape 33 comporte au moins trois sous-étapes SE5, SE6 et SE7. Dans cette étape, pour garantir la sécurité de la surveillance du radar (indispensable en ATC), en cas de détection de conflit de code Il/SI, l'invention permet :
- d'isoler la présence d'une cible non détectée par le radar dans la zone de conflit ;
- d'évaluer la pré-localisation de cette cible en azimut dans la zone de conflit ;
- de détecter et localiser précisément cette cible en distance et azimut afin de poursuivre ensuite sa surveillance comme toutes les autres cibles.

Dans la sous-étape SE5, le radar isole la présence d'une cible non détectée dans la zone de conflit (en cas de détection de conflit de code II/SI). A cet effet, pour détecter la présence d'une cible verrouillée par un autre radar R2 potentiellement dans la zone de conflit code Il/SI (zone B ou C de la figure 7) ) le radar isole en premier lieu, parmi l'ensemble des fruits captés, les fruits DF4/5/20/21 dus à l'autre radar R2 (provoqués par celui-ci lors de son fonctionnement opérationnel avec les cibles) dont l'adresse Mode S n'est pas encore connue de R1.
En conséquence, une cible, référencée par son adresse ModeS, dont une partie de ses fruits DF4/5/20/21 sont :
- temporellement entre des fruits DF11_R2 de cibles connues de R1 dans les zones D1 et D2,
- et temporellement synchrone entre les fruits DF11_R2 des zones D1 et D2 sur P tours de R1 (autour d'une dizaine de tours par exemple),
est une cible verrouillée potentiellement dans les zones B ou C dont certains fruits sont provoqués par cet autre radar R2 (ces zones seront définies par la suite).
Le critère de synchronisme entre les fruits de la cible et les fruits de chaque cible dans D1 et D2 prend en compte une tolérance de l'écart temps entre ces fruits considérant l'évolution connue en azimut des cibles dans D1 et D2 sur les P tours et la position non connue de l'interrogation de celles-ci dans le lobe de R2.
Une cible génère des fruits avec différents radars, cette sélection temporelle permet de sélectionner que ceux dus à R2 d'une cible en zone B ou C.

Dans la sous-étape SE6, le radar effectue la pré-localisation en azimut de la cible dans la zone de conflit de code Il/SI. Plus précisément le radar évalue la pré-localisation en azimut d'une cible isolée dans la zone de conflit en exploitant la valeur absolue de l'écart temps entre les fruits de la cible sous analyse avec les fruits de cibles connues des zones D1 et D2. Considérant que la vitesse de rotation de R2 est stable, que les cibles dans D1 et D2 sont localisées en azimut et distance par R1 à chaque tour, cela permet d'estimer à chaque tour un azimut de la cible sous analyse par simple interpolation en utilisant l'heure de détection des fruits par R1 et ce sur les P tours de l'analyse temporelle précédente (ou plus selon la précision voulue). A chaque tour chaque couple d'un fruit de la cible avec un fruit d'une cible connue de D1 ou D2 permet une estimation de l'azimut. La moyenne de ces estimations constitue une pré-localisation en azimut de la cible.

Dans la sous-étape SE7, l'invention effectue par R1 la détection de position en azimut et le calcul de la distance de la cible verrouillée par R2, afin de poursuivre ensuite la surveillance comme avec toutes les autres cibles. Pour cela, on positionne l'interrogation sélective supplémentaire pour cette cible d'adresse mode S connue par ses fruits pendant la période AC (usuellement destinée aux interrogations d'appels généraux non sélectifs), donc sans modifier le fonctionnement opérationnel de surveillance sélective des cibles connues lors des Roll Call (RC). En effet, la distance de cette cible n'étant pas encore connue précisément la fenêtre d'écoute associée est de grande taille et son emploi en période RC en occuperait de l'ordre de la moitié du temps de la séquence donc au détriment des autres cibles à gérer (zone A et B).

Dans le processus illustré par la figure 3, la sous-étape SE4 de détection de conflit de code Il/SI suivie d'une déclaration externe 39, de type alerte, pointant la zone de conflit de code constitue une première chaîne de traitement 31 permettant d'améliorer la sécurité de la surveillance ATC au niveau global. Les sous-étapes SE5, SE6 et SE7 constitue une deuxième chaîne de traitement 32 permettant de garantir la surveillance par le radar 30 en cas de conflit de code Il/SI, cette surveillance étant garantie par la détection et la localisation d'avions dans la zone de conflit de code Il/SI.

On décrit maintenant plus en détail le contexte et les phases de l'invention présentées précédemment. On commence par rappeler le contexte des fruits reçus par un radar secondaire. Les fruits sont toujours issus de cibles réelles et principalement celles dans la couverture radioélectrique du radar secondaire.

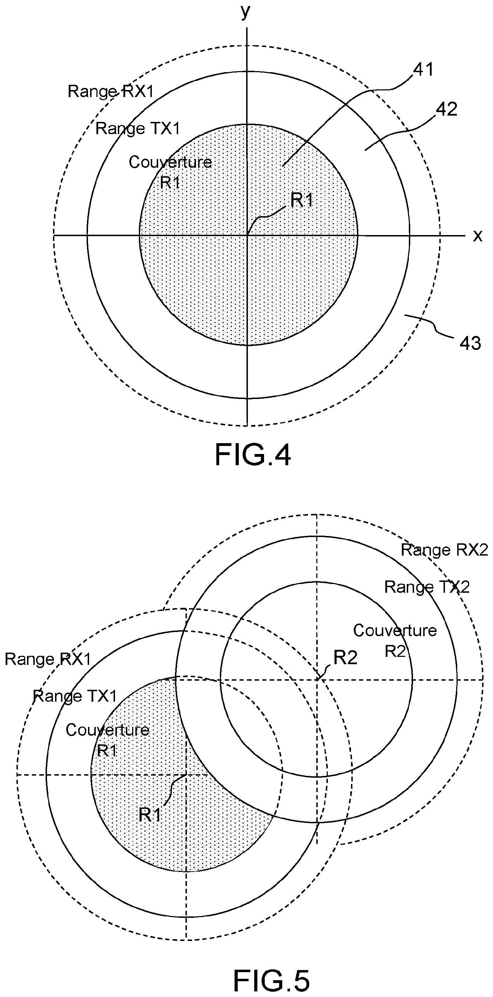

La figure 4 illustre les différentes portées du radar dans un plan XY. Pour garantir son rôle de surveillance dans une zone donnée, un radar secondaire, noté R1 par la suite, a usuellement une marge en émission afin de garantir une probabilité de détection supérieure à 99% dans sa zone de couverture 41. Dans cette zone 41, même une cible équipée d'un transpondeur aux limites basses de sensibilité à 1030 MHz peut correctement interpréter l'interrogation mode S et d'un transpondeur aux limites basses de puissance à 1090 MHz peut correctement être détectée par le radar. Il en résulte que des cibles dont le transpondeur est plus centré dans la norme de sensibilité à 1030 MHz et de puissance à 1090MHz, voire aux valeurs maximales de la norme, peuvent encore correctement interpréter (et donc répondre) sur un portée maximale bien supérieure à cette zone 41. On obtient ainsi une zone 42 plus élargie où la plupart des cibles sont encore susceptibles de répondre aux interrogations. De plus, un radar doit assurer la détection des réponses synchrones à 1090 MHz qu'il a sollicité par ses interrogations à 1030 MHz. En conséquence, sa portée de réception est souvent en pratique bien supérieure à la portée maximale d'émission conduisant à une zone de réception 43 qui englobe les zones précédentes 41, 42. On notera par la suite Range_TX la portée en émission correspondant à la limite de la zone 42 et Range_RX la portée en réception correspondant à la limite de la zone 43. Le radar secondaire en jeu est noté R1, il est situé au centre de la zone 41, les portées en émission et en réception étant notées respectivement Range_TX1 et Range_RX1 en référence à ce radar R1. Par ailleurs, les opérateurs des radars emploient souvent ceux-ci en deçà des portées radioélectriques garanties donc en ayant une couverture opérationnelle de verrouillage des cibles d'un rayon inférieur à 41 principalement pour des limites dues à la visibilité des cibles par le site radar.

La figure 5 illustre une configuration à deux radars, un deuxième radar R2 étant situé au voisinage du radar R1. Plus précisément, la figure 5 illustre le chevauchement des zones de couvertures entre les deux radars. L'analyse dans la suite de la description est faite au niveau du radar R1, une analyse réciproque pouvant être réalisée au niveau du radar R2. Le radar R2 interroge les cibles dans la couverture de R1 jusqu'à sa portée en émission Range_TX2.

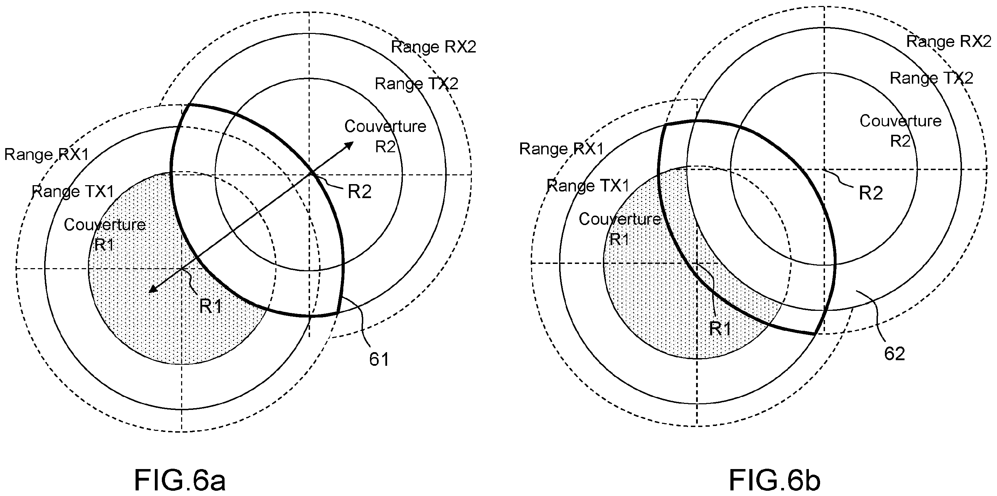

Les figures 6a et 6b montrent les zones de pollution entre les deux radars R1, R2. La figure 6a présente le volume de pollution de R2 sur R1 correspondant à la zone 61. La figure 6b présente la pollution de R1 sur R2 correspondant à la zone 62.

Comme le montre la figure 7, la zone de chevauchement entre deux radars (ici le cas de la pollution de R2 sur R1) se découpe en différentes sous-zones A, B, C, D1/D2, E, F1/F2 selon le type de message que chaque radar échange avec les cibles de la sous-zone. Le principe de l'invention consiste à analyser en détail la présence ou l'absence de ce type de message pour définir ces sous-zones en azimut, comme pour le dispositif décrit dans la demande de brevet FR 1800914. Dans la présente invention le but est de détecter les conflits de code Il/SI. Les formats des réponses échangées entre un radar et le transpondeur d'un avion sont connus de l'homme du métier. Le type de réponse dépend à la fois du radar et de la tâche qui lui est attribuée dans la zone du radar où se situe la cible.

La zone concernée en cas de conflit de code Il/SI est la zone B dans laquelle si une cible arrive vers R1 en venant de la couverture de R2 (zones E, C, B) n'est pas détectée par R1 avant la zone A car en zone B, étant verrouillée par R2, elle ne répond pas aux appels généraux All Call (DF11) de R1 qui ne la voit donc pas.

Le tableau 1 ci-dessous synthétise, pour un exemple de fonctionnement usuel d'un radar mode S, avec des codes Il/SI différents (II1 pour R1 et II2 pour R2), les tâches respectives de R1 et R2 selon l'appartenance de la zone.

**[Table 1]**

| Sous Zone | Radar R1 (II1) | Radar R2 (112) | Réponse Synchrone pour R1 | Réponse Asynchrone pour R1 (dues à R2) |
|---|---|---|---|---|
| Zone_ A | Cible sous Surveillance Verrouillée sur II1 | Cible hors Surveillance Non Verrouillée sur 112 | DF4, DF5, DF20, DF21 | DF11 |
| Zone_ B | Cible sous Surveillance Verrouillée sur II1 | Cible sous Surveillance Verrouillée sur 112 | DF4, DF5, DF20, DF21 | DF4, DF5, DF20, DF21 |
| Zone_ C | Cible hors Surveillance Non Verrouillée sur II1 | Cible sous Surveillance Verrouillée sur 112 | DF11 | DF4, DF5, DF20, DF21 |
| Zone_ D1/D2 | Cible hors Surveillance Non Verrouillée sur II1 | Cible hors Surveillance Non Verrouillée sur 112 | DF11 | DF11 |
| Zone_ E | Pas de réponse Synchrone | Cible sous Surveillance Verrouillée sur 112 | - | DF4, DF5, DF20, DF21 |
| Zone_ F1/F2 | Pas de réponse Synchrone | Cible hors Surveillance Non Verrouillée sur 112 | - | DF11 |

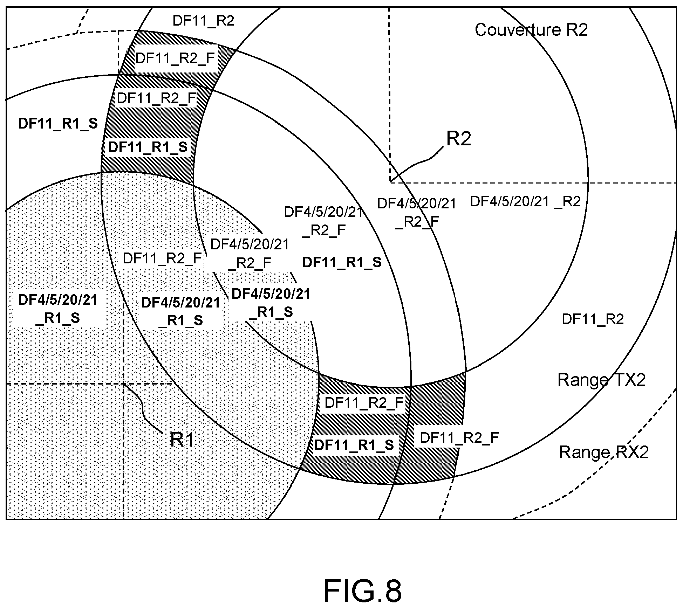

La figure 8 présente pour des codes Il/SI différents les types de réponses par sous-zones. Plus particulièrement, elle présente les messages échangés dans la zone de chevauchement selon la sous-zone en relation avec le tableau 1 ci-dessus. Les réponses synchrones pour R1 sont indiquées en caractère gras et les réponses asynchrones pour R1 sont indiquées en caractères non gras, ces dernières sont les fruits dus à R2.II y a aussi les extensions S pour Synchrone et F pour Fruit.

Le tableau 2 ci-dessous synthétise les tâches respectives de R1 et de R2 selon l'appartenance d'une cible à une sous-zone dans le cas de l'emploi d'un même code Il/SI par les deux radars, ce codes étant noté IIc.

**[Table 2]**

| Sous Zone | Radar R1 (IIc) | Radar R2 (IIc) | Réponse Synchrone pour R1 | Réponse Asynchrone pour R1 dues à R2 |
|---|---|---|---|---|
| Zone_A | Cible sous Surveillance Verrouillée sur IIc | Cible hors Surveillance Non Verrouillée sur IIc | DF4, DF5, DF20, DF21 | le radar R1 verrouille les avions sur IIc |
| Zone_B | Cible sous Surveillance Verrouillée sur IIc | Cible sous Surveillance Verrouillée sur IIc | DF4, DF5, DF20, DF21 Zone de conflit code II/SI | DF4, DF5, DF20, DF21 Zone de conflit code II/SI |
| Zone C | Cible hors Surveillance Non Verrouillée sur IIc | Cible sous Surveillance Verrouillée sur IIc | ► le radar R2 verrouille les avions sur IIc | DF4, DF5, DF20, DF21 |
| Zone_D1/D2 | Cible hors Surveillance Non Verrouillée sur IIc | Cible hors Surveillance Non Verrouillée sur IIc | **DF11S** ► plot R1 tj présent car R2 ne verrouille pas (sur IIc) | **DF11F** ► fruit de R2 tj présent car R1 ne verrouille pas (sur IIc) |
| Zone_E | Pas de réponse Synchrone | Cible sous Surveillance Verrouillée sur IIc | - | DF4, DF5, DF20, DF21 |
| Zone_F1/F2 | Pas de réponse Synchrone | Cible hors Surveillance Non Verrouillée sur IIc | - | DF11 |

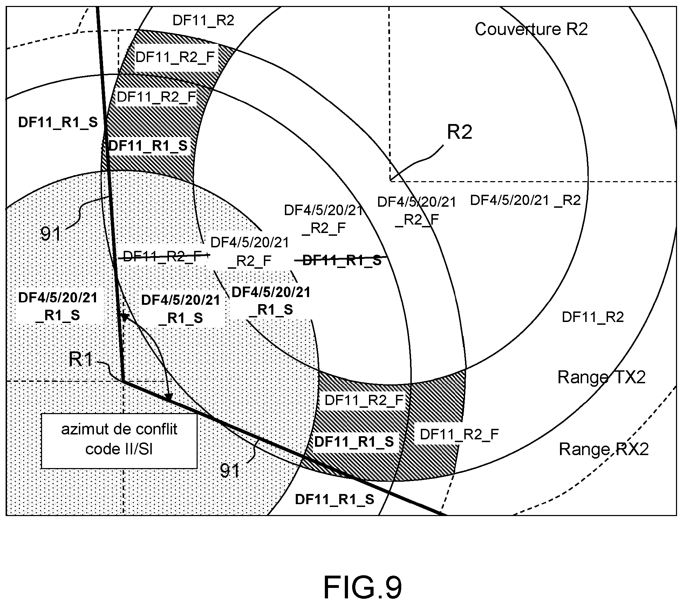

La figure 9 présente pour un même code II/SI les types de réponses par sous-zones. Plus particulièrement, elle présente les messages échangés dans la zone de chevauchement selon la sous-zone en relation avec le tableau 2. Les caractères en gras indiquent les fruits DF11 ayant disparus en cas de même code Il/SI (IIc). Les caractères en non gras indiquent les réponses synchrones et asynchrones toujours présentes. La distribution des réponses DF11 aux appels généraux All Call de chaque radar a évolué par rapport à la figure 8, suite à l'emploi du même code II/SI (IIc) par les radars R1 et R2 :
- dans les sous-zones D1 et D2, les réponses synchrones pour R1 et asynchrones pour R2 sont toujours présentes ; de plus elles utilisent le même code II_{C} ;
- dans la sous-zone A, les cibles dans la couverture de R1 ne génèrent pas de fruit DF11 avec R2 ;
- dans la sous-zone C, les cibles quittant la couverture (sous-zone B) de R1 ne répondent plus aux appels généraux All Call de R1 alors que R1 ne les verrouille plus.

Le tableau 3 ci-dessous synthétise pour R1 les différences selon les sous-zones en cas de conflit de code II/SI ou en l'absence de conflit.

**[Table 3]**

| ZONE | Code II/SI différents | | | Code II/SI identiques | | | Commentaires |
|---|---|---|---|---|---|---|---|
| | Plot dans couverture | Plot hors couver-ture | Fruits | Plot dans couverture | Plot hors couverture | Fruits | |
| A | oui | | DF11_R2 | Oui | | 0 | Les avions gérés par R1 ne font plus de fruit avec R2 |
| B | Oui Portée sortante = portée entrante | | DF4_R2, DF5_R2, DF20_R2, DF21_R2 | Oui Portée sortante> portée entrante | | DF4_R2, DF5_R2, DF20_R2, DF21_R2 | La portée maximale des cibles sortant de la couverture (connue en A) est > à celle des cibles entrant car non vue dans B |
| C | | Oui Portée sortante= entrante | DF4_R2, DF5_R2, DF20_R2, DF21_R2 | | 0 | DF4_R2, DF5_R2, DF20_R2, DF21_R2 | Les plots sortant de la couverture opérationnel B de R1 vers C ne font plus de plots synchrones DF11_R1 |
| D | | Oui Portée sortante= portée entrante | DF11_R2 | | Oui Portée sortante= portée entrante | DF11_R2 | Les fruits de R2 ont le même code II/SI que R1 (IIc) |

Selon la distribution des avions dans l'espace parmi les quatre sous-zones, 1 à 4 critères peuvent être atteints :
- zone D1 et D2 : présence de plots de R1 faisant des fruits de même code IIc avec R2 ;
- zone C : les plots de R1 sortant de la zone B ne répondent pas aux appels généraux (UF11) de R1 ;
- zone A ; les plots de R1 ne font pas de fruit de code II_{C} qui est l'identifiant de R2 ;
- les plots entrants ne sont vus par R1 en zone B ils apparaissent en AC qu'en zone A : portée sortante > portée entrante.
A la suite de cette analyse, le radar R1 considère avoir une présomption de conflit de code Il/SI dans une zone d'azimut compris entre les deux zones D1 et D2 délimitée synoptiquement par les deux droites 91, 92 sur la figure 9. En pratique, la position de ces droites est obtenue par la droite passant par le radar R1 et :
- dans D1 : la cible de R1 générant des fruits de même code Ilc ayant un azimut vu de R1 le plus important ;
- dans D2 : la cible de R1 générant des fruits de même code Ilc ayant un azimut vu de R1 le plus faible.

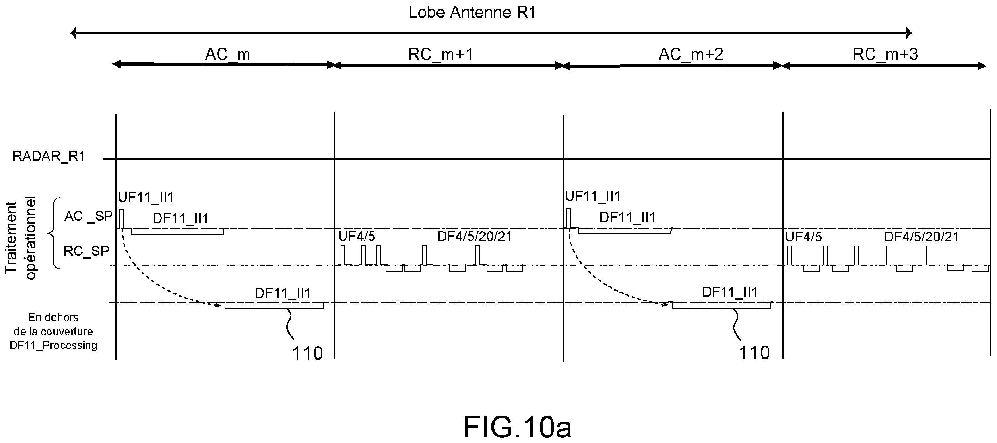

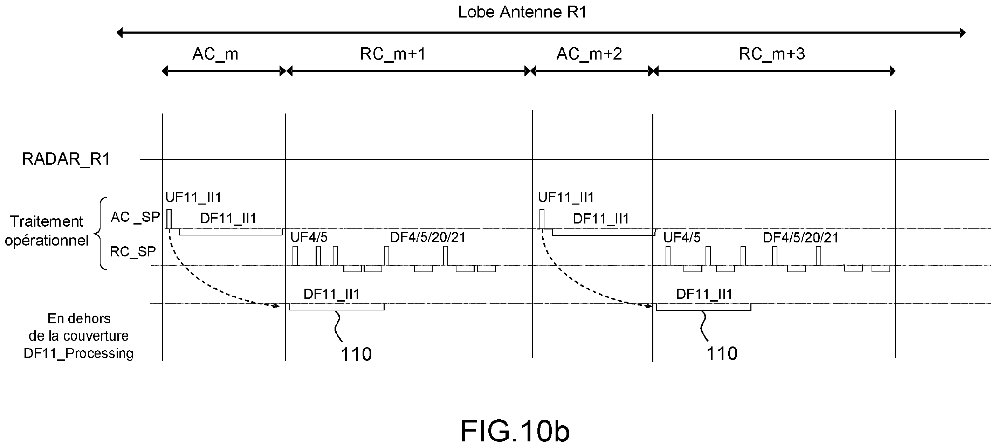

En regard de la figure 10a ou figure 10b qui illustrent la détection des plots DF11 hors couverture opérationnelle radar, on décrit maintenant le traitement spécifique des fruits en vue de confirmer l'azimut de conflit de code Il/SI. Afin de détecter et de définir l'azimut de conflit de code Il/SI, il est nécessaire au niveau du radar R1 de traiter ses réponses synchrones dans les deux zones D1 et D2 sans interférer avec le fonctionnement opérationnel du radar.

Dans son fonctionnement opérationnel, le radar gère deux types de périodes pour les avions dans sa couverture (zones A et B) :
- All Call (AC) pour détecter les avions Mode S entrant :
   - Mode S Radar Beam Management positionne dans chaque AC une interrogation appel général UF11 ;
   - Mode S Reply Processing détecte les réponses DF11 dans la portée opérationnelle du radar ;
   - Mode S Extracteur construit un plot mode S DF11 toujours dans la portée opérationnelle du radar ;
- Roll Call (RC) pour assurer la surveillance des avions Mode S (au niveau ELS ou EHS) :
   - Mode S Radar Beam Management interroge à tour de rôle sélectivement les avions préalablement détectés en AC via des UF4/5/20/21 ;
   - Mode S Reply Processing détecte les réponses DF4/5/20/21 dans la portée opérationnelle du radar ;
   - Mode S Extracteur construit un plot Mode S enrichi toujours dans la portée opérationnelle du radar ;
   - puis le radar verrouille la cible ainsi acquise en RC pour qu'elle ne réponde plus aux appels généraux de ce radar donc sur son identifiant qu'est son code II/SI.

Dans la présente invention, la fonction mode S dans le traitement 21 des réponses asynchrones référencie tous les fruits DF11 du code II1 de R1 reçus par rapport à la dernière interrogation UF11 des périodes AC du radar de R1 et ce au-delà de la portée opérationnelle du radar. Deux approches sont possibles, comme le montre :
- soit la figure 10a en accroissant la durée des périodes AC ;
- soit la figure 10b où l'écoute des DF11 synchrones se situe au-delà de la période AC soit pendant la période RC.
Les deux solutions permettent à la fonction 22 d'extraction DF11 de pouvoir construire des plots DF11 synchrones hors couverture opérationnelle (au-delà de l'écoute usuelle de la période AC), donc pour les zones D1, C et D2. Les figures 10a et 10b montrent ainsi une écoute supplémentaire 110, au-delà de la période AC d'écoute opérationnel (ce qui n'est pas un besoin opérationnel pour les radars selon l'art antérieur) ceci donc sans perturber le fonctionnement opérationnel du radar dans le cas de la figure 10b. Cette écoute supplémentaire est réalisée dans la zone 42, en référence à la figure 4. Il est donc à noter que les réponses DF11 synchrones dans la couverture opérationnelle du radar ne sont pas traitées par cette nouvelle fonction 22 puisqu'elles sont déjà exploitées au titre du fonctionnement opérationnel en AC par le radar.

La durée de cette écoute supplémentaire des DF11 n'est en fait limitée que par la durée de la période RC puisqu'elle se déroule en parallèle à cette période avant la prochaine période AC dans le cas de la figure 10b. En pratique une période RC étant de l'ordre de 1,5 à 2 fois la durée d'une période AC permet donc une écoute bien supérieure au double de la portée opérationnelle. En conséquence la portée maximale d'écoute n'est limitée en pratique que par la portée radioélectrique.

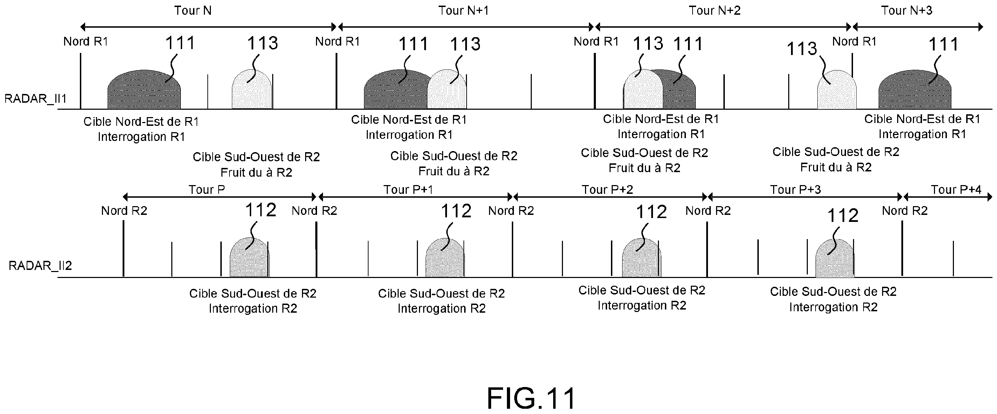

En regard de la figure 11, on décrit la recherche des cibles en zone B par approche temporelle des cibles. Pour cette approche temporelle, on considère l'hypothèse prépondérante des radars à antenne mécanique tournante, correspondant à la très grande majorité des radars ATC. La figure 11 présente en exemple, sous la forme d'un synoptique simplifié, le cas des radars R1 et R2 précédents pour lesquels l'ensemble des cibles dans la zone de couverture RF commune sont
- Au nord-est pour le radar R1 ;
- Au sud-ouest pour le radar R2.
ayant de plus en hypothèse complémentaire (dans cet exemple) une période de rotation de l'antenne de R2 de l'ordre de ¾ de celle de R1.

La figure 11 présente les réponses synchrones 111 pour R1 et les réponses synchrones 112 pour R2, ainsi que les réponses asynchrones 113 (fruits) pour R1 des cibles dans cette zone commune. En raison du glissement naturel entre les deux rotations d'antenne, on vérifie bien que les fruits dus à R2 sont aussi asynchrones en azimut vis-à-vis de R1 qui peut néanmoins dater temporellement les fruits avec précision pour en calculer ultérieurement leur azimut.

Le principe de l'invention, pour détecter la présence d'une cible verrouillée par R2 potentiellement dans la zone B, nécessite en premier d'isoler, parmi l'ensemble des fruits captés par R1, les fruits DF4/5/20/21 dus au radar R2 que celui-ci va provoquer lors de son fonctionnement opérationnel avec les cibles dont celles en zone B ou C. Il est à noter que les messages DF4/5/20/21 ne contiennent pas l'identifiant de R2 mais uniquement l'adresse mode S de la cible ils ne sont donc pas autoporteurs du radar les ayant provoqués : ils permettent uniquement d'identifier la cible.

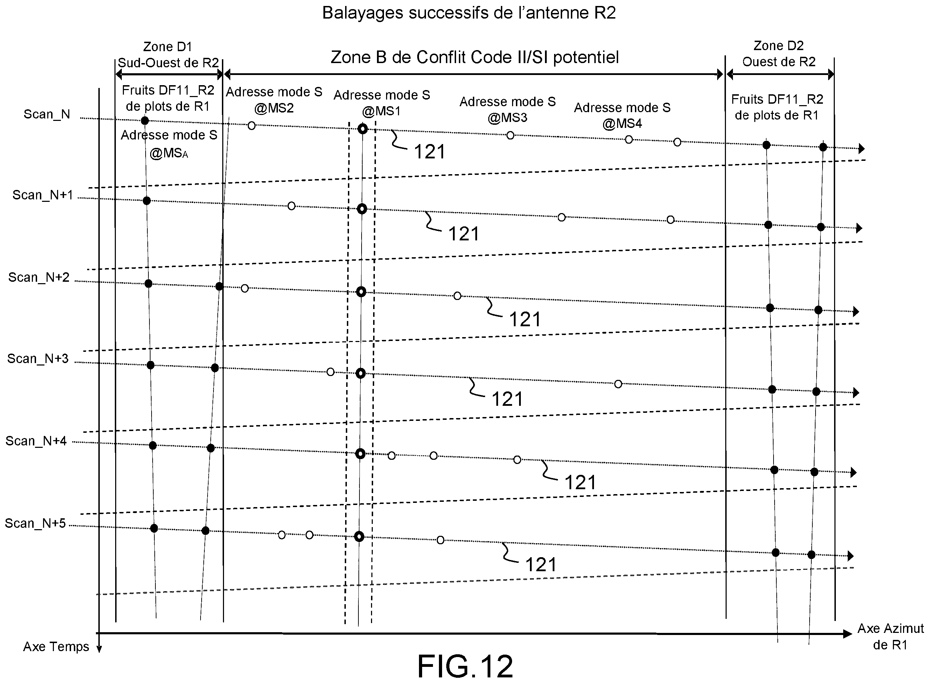

A cet effet, comme le montre la figure 12, l'invention exploite le fait que les fruits de R2 sont quasiment synchrones entre eux de tour à tour de l'antenne de R2.
L'analyse précédente a permis à R1 de localiser les cibles générant des fruits DF11 dus à R2 (selon son identifiant) dans les zones D1du Sud-Est R1 (Sud-Ouest de R2) et D2 du Nord-Est de R1 (Ouest de R2) selon l'exemple de la figure 9.
L'étape suivante de l'analyse consiste à rechercher les fruits DF4/5/20/21 synchrones de ces fruits DF11 de R2 en analysant sur plusieurs tours ceux dont l'écart temporel est quasi contant avec les fruits des cibles des zones D1 et D2 en tenant compte du déplacement de ces cibles (ce que R1 peut calculer puisque ces cibles font des plots synchrones pour R1 hors couverture opérationnelle).
En conséquence, ces fruits DF4/5/20/21 :
- temporellement entre des fruits DF11_R2 de cibles connues de R1 dans les zones D1 et D2 de tour à tour,
- et temporellement synchrone entre les fruits DF11_R2 des zones D 1 et D2 sur P tours de R1 (autour d'une dizaine de tours _ paramètre de l'invention),
sont issus de cibles potentiellement dans les zones B ou C et provoqués par R2.

La figure 12 illustre les balayages successifs en azimut de R1 par l'antenne de R2 à partir d'un balayage N (repéré scan_N) le long de l'axe des temps, en représentant des zooms temporels successifs lors du passage de l'antenne de R2 de la zone « D1_Sud-Ouest de R2» à la zone « D2_Ouest de R2» en passant donc par les zones B et C. Les lignes en trait discontinu figurent le reste de la rotation de l'antenne de R2 aux autres azimuts de R2, volontairement réduit en échelle temporelle pour mettre en évidence les parties en zoom).
Dans les zones « D1_Sud-Ouest de R2» et « D2_Ouest de R2», on ne considère que les cibles émettant des fruits DF11_R2 provenant de R2 représentés par des ronds pleins.
Dans la période temporelle centrale entre les zones D1 et D2, les fruits DF4/5/20/21 que R1 capte sont de deux types. Le radar selon l'invention analyse ces fruits cible par cible (adresse mode S disponible dans les DF4/5/20/21) en écart temporel à chaque tour vis-à-vis des fruits DF11_R2 des deux zones D1 et D2 :
- ceux issus de R2 pour des cibles en zone B ou C sont alors quasi stables vis-à-vis des fruits DF11 de R2 puisqu'issus du même radar (représentés par des ronds gras) ;
- ceux issus d'autres radars pour des cibles à tout azimut, que R1 va néanmoins détecter par son antenne omnidirectionnelle qu'est le diagramme CONT, ne sont pas stables temporellement vis-à-vis des fruits de R2 considérant les écarts de rotation entre les antennes de ces radars avec R2 (représentés par les autres ronds non gras).
Selon la figure 12, la cible représentée par les ronds en gras d'adresse mode S MS1 (@MS1) étant stable (selon une tolérance temporelle ΔT paramétrable) vis-à-vis des fruits DF11_R2 (@MS_{A} de D1 et @MS_{B} de D2) sur une analyse de P tours de profondeur (paramètre) est considérée comme en zone B ou C. L'analyse de la figure 12 permet donc de positionner les fruits entre eux.

Pour pré-localiser en azimut une cible potentiellement verrouillée comme étant en zone B sans répondre aux appels généraux UF11 de R1 on peut utiliser au moins deux méthodes : une pré-localisation en azimut par écart temporel selon l'invention ou une pré-localisation en azimut par utilisation du diagramme d'antenne non-revendiquée.

Pour la pré-localisation en azimut, on remarque que lors de l'étape précédente, on a utilisé la stabilité de l'écart temporel entre les fruits de la cible d'adresse MS1 (@MS1) et les fruits DF11_R2 des zones D1 et D2 pour isoler son appartenance à la zone B ou C. Or, le radar R1 connait la position azimutale dans son référentiel des cibles en zones D1 et D2 ayant générées des fruits DF11_R2.

La valeur absolue de l'écart temps de la cible sous analyse (@MS1) avec chaque cible (@MS_{A} et @MS_{B}) des zones D permet d'estimer un azimut de la cible @MS1 à chaque tour sur les P tours de l'analyse précédente (ou plus selon la précision voulue). La moyenne de ces estimations constitue une pré-localisation azimut de la cible @MS1 sur un tour. Une régression linéaire sur P tours permet à la fois d'affiner l'azimut et d'évaluer de plus une vitesse angulaire de la cible vis-à-vis de R1.

L'autre principe de la pré-localisation en azimut, par utilisation du diagramme d'antenne, est notamment décrit dans la demande de brevet FR1800657.

Une cible verrouillée potentiellement en zone B ayant été localisée en azimut, il reste à la localiser en distance. Dans la suite de l'exemple précédent on considère la cible @MS1. Cette cible @MS1 à localiser en distance vis-à-vis de R1 :
- n'est pas dans la zone A car elle aurait alors répondu à l'interrogation UF11 de R1 ;
- est potentiellement en zone B donc dans la zone de responsabilité de R1, dans ce cas elle doit être détectée ;
- est potentiellement en zone C donc hors zone de responsabilité de R1, dans ce cas il n'est pas nécessaire de la détecter.
Il est nécessaire de rechercher la cible @MS1 au-delà de la distance maximum de la zone A et en dessous de la distance minimum de la zone B. Deux méthodes au moins permettent de détecter et positionner précisément la cible @MS1 :
- soit en exploitant une fonctionnalité du protocole mode S ;
- soit en exploitant une interrogation sélective de la cible zone B.

Le protocole mode S propose, en cas de conflit de code Il/SI, de forcer le déverrouillage des cibles recevant l'interrogation d'appel général UF11 forçant à répondre un transpondeur verrouillé sur le code Il/SI de l'UF11. Cette approche est à la fois :
- très polluante puisque toutes les cibles en zone A comme en zone B que le radar R1 connait déjà vont répondre, à l'azimut d'émission de cet appel UF11 mais aussi sur la largeur en azimut du lobe de l'antenne en émission (EBW_TX proche de 6°) ;
- pas toujours efficace car toutes ces réponses mode S vont s'emmêler aussi :
   - si le nombre de cibles est élevé dans cette direction azimutale ;
   - voire simplement si une cible est proche en distance de @MS1,
la détection @MS1 aura une forte probabilité de n'avoir pas lieu au 1^{er} essai et demandera plusieurs essais sur plusieurs tours provoquant à chaque fois nombre de réponses inutiles auprès des cibles déjà connues.

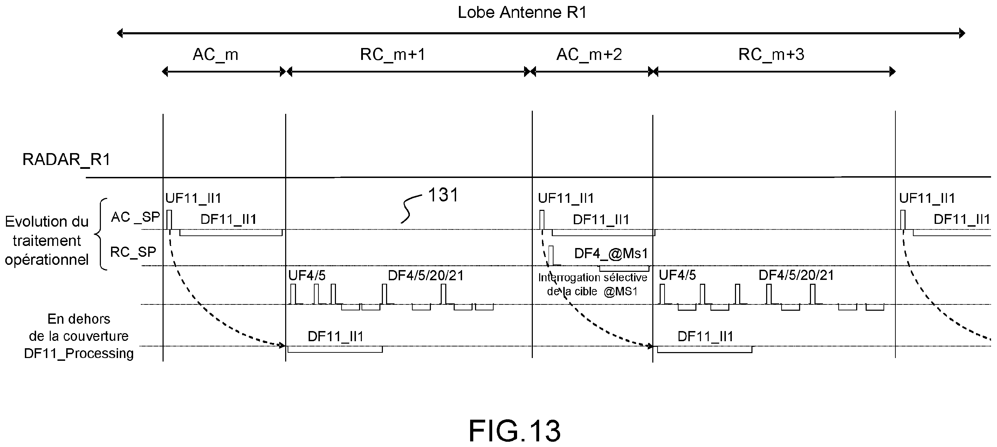

Dans l'autre méthode, illustrée par la figure 13, pour éviter de faire répondre les cibles déjà connues en zone A ou en zone B, on émet une interrogation sélective de la cible @MS1 à son azimut pré-localisé. Comme le montre la figure 13, on positionne l'interrogation sélective pour la cible d'adresse mode S @MS1 pendant la période des appels AC (usuellement destinée aux interrogations d'appels généraux non sélectifs), donc sans modifier le fonctionnement opérationnel de surveillance sélective des cibles connues lors des appels RC. Dans l'exemple de la figure 13, lors de la période AC à l'azimut de la cible, une interrogation sélective UF4 pour l'adresse @MS1 est rajoutée dans la période ACₘ₊₂ en plus de l'interrogation générale UF11.

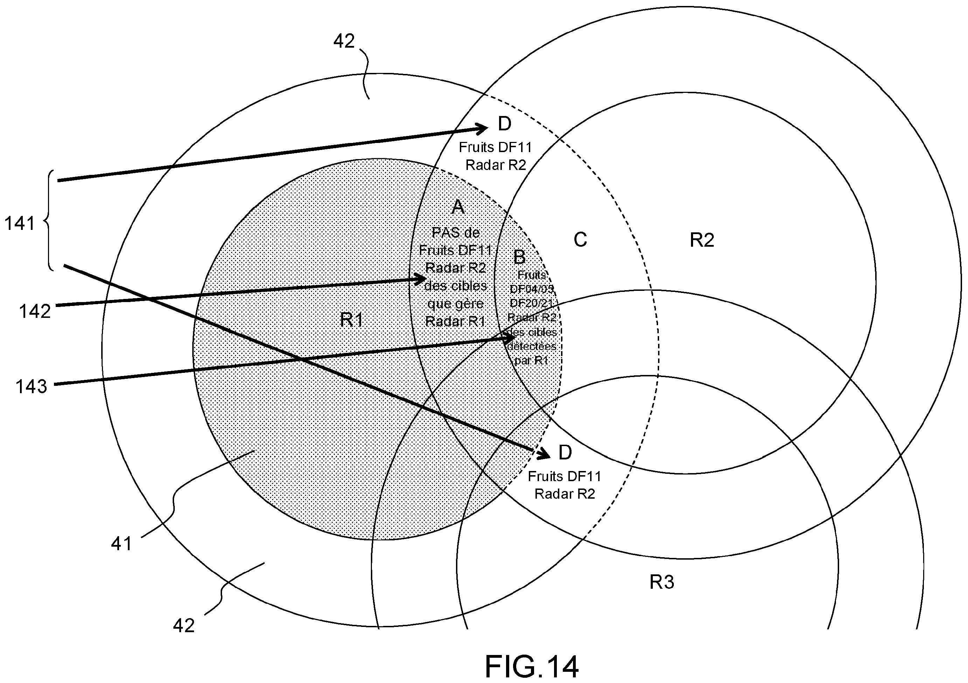

A la lumière de la description de mise en œuvre de l'invention qui vient d'être faite, on illustre à l'aide de la figure 14 le principe de l'invention dans un cas à trois radars, plus particulièrement la deuxième étape 32 et la troisième étape 33 (voir figure 3). Le radar secondaire considéré est toujours le radar R1 avec ici deux radars environnants, le radar R2 et un radar R3. Le principe énoncé pour R2 étant applicable à R3. Le radar R1 détecte donc des cibles ne répondant pas aux appels généraux potentiellement présentes dans la zone de couverture, ces cibles étant verrouillées par le radar R2 en raison d'un conflit de code Il/SI. Dans la première étape 31, le radar R1 ayant préalablement étendu sa portée dans une zone étendue 42 et ayant détecté des fruits dans cette zone 42, la détection est faite aux conditions suivantes, le radar R1 :
- détecte 141 des fruits DF11_R2, ayant comme source le radar R2, dans une zone étendue 42 en dehors de la zone de couverture 41, de même code Il/SI (détection dans les sous-zones D) que R1;
- constate l'absence 142 de fruits DF11_R2 dans la zone de couverture de R1 ne chevauchant pas la zone de couverture de R2 (sous-zone A);
- constate l'absence de réponse DF11_R1 synchrone des avions sortant de sa couverture opérationnelle (sous-zone C).
Dans ces conditions le radar R1 en déduit un conflit de code Il/SI entre les deux radars R1 et R2 (R2 verrouillant les réponses), correspondant à la sous-étape SE4.
La présence de fruits DF4, DF5, DF20 ou DF21, ayant pour origine R2, dans les zone B ou C de chevauchement entre les couvertures des deux radars R1 et R2, le radar R1 en déduit 143 la présence d'un avion dans ces zones B ou C. On détermine par la suite l'azimut et la distance de la cible non vue comme décrit précédemment.

## Revendications

1. Procédé de détection de conflits de code II/SI d'identification de radars environnant un radar secondaire mode S (R1), **caractérisé en ce qu'**il comporte au moins :
- une première étape (31) dans laquelle :
- la couverture dudit radar (R1) est étendue (SE2) pour obtenir des réponses synchrones dans une couverture radar étendue ;
- ledit radar (R1) détecte des réponses asynchrones non sollicitées dites fruits (SE1) dans une zone de couverture radar étendue (42) ;
- les fruits sont associés aux cibles mode S de ladite couverture radar étendue (SE3), la position desdits fruits étant déterminée par interpolation, avec les détections synchrones des dites cibles sur la base de leur adresse mode S ;
- une deuxième étape (32) dans laquelle ledit radar (R1) détecte un conflit de code II/SI par analyse de zones géographiques de couvertures radars (A, B, C, D1 et D2) commune audit radar (R1) et à au moins un radar environnant (R2), un conflit étant détecté si ledit radar (R1) :
- détecte (141) la présence de fruits DF11 de même code II/SI que ledit radar (R1), ayant comme source ledit radar environnant (R2), dans deux sous-zones de ladite couverture radar étendue (zone_D1, zone_D2) ;
- constate (142) l'absence de fruits DF11 provoqués par ledit radar environnant (R2) dans la zone de couverture radar dudit radar (R1) ne chevauchant par la zone de couverture radar dudit radar environnant (zone A) ;
- constate l'absence de réponse synchrone DF11 à un appel général UF11 du radar (R1) de la part d'avions sortant de la zone de couverture radar dudit radar; la zone de chevauchement (zone_B) dans la couverture radar dudit radar (R1) et la couverture radar dudit radar environnant (R2) formant une zone de conflit de code II/SI ; et
- une troisième étape (33) réalisant une détection (SE5), par ledit radar (R1), de cibles verrouillées par ledit radar environnant (R2) dans ladite zone de conflit (zone_B, zone_C), à partir de la détection (143) de fruits DF4, DF5, DF20 ou DF21 provoqués par ledit radar environnant (R2) dans ladite zone de conflit (zone_B, zone_C) indiquant la présence d'une cible dans ladite zone de conflit, ladite détection étant effectuée en analysant sur plusieurs tours les fruits DF4, DF5, DF20 ou DF21 dont l'écart temporel est quasi contant avec les fruits DF11 des cibles dans les deux sous-zones de ladite couverture radar étendue (zone_D1, zone_D2) en tenant compte du déplacement de ces cibles; et une pré-localisation (SE6) desdites cibles dans une zone azimutale à l'intérieur de ladite zone de conflit (zone_B, zone_C) étant obtenue en exploitant la valeur absolue de l'écart temporel de chacun de ses fruits DF4, DF5, DF20 ou DF21 desdites cibles dû audit radar environnant (R2) avec chacun des fruits, de type DF11, des autres cibles des deux sous-zones de ladite zone de couverture radar étendue (zone_D1, zone_D2) provoqués par ledit radar environnant (R2), la position de chacune desdites autres cibles étant connue en azimut.

2. Procédé selon la revendication 1, **caractérisé en ce qu'**une localisation précise en distance et en azimut d'une cible est obtenue par positionnement d'interrogations sélectives UF4 ou UF5 (131, SE7) dans ladite zone azimutale de pré-localisation de ladite cible associée à une fenêtre d'écoute de la réponse prenant en compte l'incertitude sur la distance de ladite cible, laquelle étant estimée à partir de la puissance des fruits de cette cible et des caractéristiques du radar, lesdites interrogations sélectives étant émises à destination de ladite cible pendant la période « Roll Call », ou pendant la période « All Call », en plus de l'interrogation mode S « All Call » UF11.

3. Procédé selon l'une quelconque des revendications précédentes, **caractérisé en ce que**, ledit radar émettant des appels généraux appelés UF11, dans ladite première étape (31, SE2), en réponse auxdits appels généraux UF11 dudit radar l'écoute des réponses DF11 synchrones après la période « All Call » et pendant la période « Roll Call » fournit des réponses synchrones supplémentaires (110) dans ladite zone de couverture radar étendue (42), lesdites réponses supplémentaires ainsi obtenues étant traitées comme les autres réponses synchrones en période « All Call » pour construire des plots DF11 ayant les attributs d'un plot mode S usuel.

4. Radar secondaire, **caractérisé en ce qu'**il est configuré pour mettre en œuvre le procédé selon l'une quelconque des revendications précédentes.

5. Radar selon la revendication 4, **caractérisé en ce que** comportant des périodes d'écoute associées à des interrogations émises par ledit radar, il comporte des moyens (21) de traitement permanent des réponses asynchrones mode S, indépendamment auxdites périodes d'écoutes.

6. Radar selon la revendication 5, **caractérisé en ce que** ledit radar comportant une antenne (1) ayant des diagrammes d'antennes (11, 12, 14, 15) lesdits moyens de traitement effectuent la détection et le décodage desdites réponses asynchrones en exploitant séparément lesdits diagrammes de l'antenne dudit radar :
- pour détecter toutes les réponses reçues, asynchrones et synchrones, via ladite antenne ;
- pour décoder les réponses de tout type, les données des messages et en extraire l'adresse mode S ;
- pour enrichir chaque réponse décodée de ses caractéristiques, lesdites caractéristiques étant au moins l'heure de détection, l'azimut du lobe principal de l'antenne lors de la détection et la puissance reçue sur les diagrammes d'antennes.

7. Radar selon l'une quelconque des revendications 4 à 6, **caractérisé en ce qu'**il comporte un extracteur (22) de plots DF11 dans ladite zone de couverture étendue (42), l'extraction de plots DF11 étant effectuée en dehors de la portée opérationnelle dudit radar uniquement pour localiser et identifier des cibles par leur adresse mode S.

8. Radar selon l'une quelconque des revendications 4 à 7, **caractérisé en ce qu'**il comporte des moyens de traitement (23) pour détecter les conflits de codes II//SI et pour détection et localiser des cibles verrouillées par ledit radar environnant en zone de conflit de code Il/SI, lesdits moyens (23) réalisant :
- l'association des fruits avec les plots synchrones ;
- l'analyse géographique des sources de fruits DF11 qui sont des réponses asynchrones dont la source est un radar environnant (R2),
- l'isolation de la présence de cibles non détectées par ledit radar dans ladite zone de conflit ;
- l'évaluation de la pré-localisation en azimut desdites cibles vis-à-vis de dudit radar dans ladite zone de conflit ;
- la détection et la localisation desdites cibles en distance et azimut afin que ledit radar poursuive sa fonction de surveillance comme pour toutes les autres cibles.

## Patentansprüche

1. Verfahren zur Erkennung von II/SI-Identifikationscode-Konflikten von Radaren, die um ein S-Mode-Sekundärradar (R1) liegen, **dadurch gekennzeichnet, dass** es mindestens umfasst:
- einen ersten Schritt (31), bei dem:
- die Abdeckung des Radars (R1) erweitert wird (SE2), um synchrone Antworten in einer erweiterten Radarabdeckung zu erhalten;
- das Radar (R1) unaufgeforderte asynchrone Antworten, sogenannte "Fruits", in einem erweiterten Radarabdeckungsbereich (42) erkennt (SE1);
- die Fruits den Mode-S-Zielen der erweiterten Radarabdeckung zugeordnet werden (SE3), wobei die Position der Fruits durch Interpolation mit den synchronen Erkennungen der Ziele auf Basis deren Mode-S-Adresse bestimmt wird;
- einen zweiten Schritt (32), bei dem das Radar (R1) einen II/SI-Code-Konflikt durch Analysieren von geografischen Radarabdeckungsbereichen (A, B, C, D1 und D2), die dem Radar (R1) und mindestens einem umliegenden Radar (R2) gemein sind, erkennt, wobei ein Konflikt erkannt wird, wenn das Radar (R1):
- das Vorhandensein von DF11-Fruits mit demselben II/SI-Code wie das Radar (R1), deren Quelle das umliegende Radar (R2) ist, in zwei Unterbereichen der erweiterten Radarabdeckung (zone_D1, zone_D2) erkennt (141);
- das Fehlen von durch das umliegende Radar (R2) hervorgerufenen DF11-Fruits in dem Radarabdeckungsbereich des Radars (R1), der den Radarabdeckungsbereich des umliegenden Radars (zone_A) nicht überlappt, feststellt (142);
- das Fehlen einer synchronen DF11-Antwort auf einen allgemeinen UF11-Anruf des Radars (R1) seitens Luftfahrzeugen, die den Radarabdeckungsbereich des Radars verlassen, feststellt;
wobei der Überlappungsbereich (zone_B) in der Radarabdeckung des Radars (R1) und der Radarabdeckung des umliegenden Radars (R2) einen II/SI-Code-Konfliktbereich bildet; und
- einen dritten Schritt (33), der über das Radar (R1) eine Erkennung (SE5) von durch das umliegende Radar (R2) anvisierten Zielen in dem Konfliktbereich (zone_B, zone_C) auf Grundlage der Erkennung (143) von durch das umliegende Radar (R2) in dem Konfliktbereich (zone_B, zone_C) hervorgerufenen DF4-, DF5-, DF20- oder DF21-Fruits, die auf das Vorhandensein eines Ziels in dem Konfliktbereich hinweisen, durchführt, wobei die Erkennung durch Analysieren der DF4-, DF5-, DF20- oder DF21-Fruits, deren zeitlicher Abstand mit den DF11-Fruits der Ziele in den zwei Unterbereichen der erweiterten Radarabdeckung (zone_D1, zone_D2) quasi konstant ist, über mehrere Durchläufe unter Berücksichtigung der Bewegung dieser Ziele vorgenommen wird; und eine Vorortung (SE6) der Ziele in einem Azimutbereich innerhalb des Konfliktbereichs (zone_B, zone_C) unter Verwendung des Absolutwerts des zeitlichen Abstands jedes der DF4-, DF5-, DF20- oder DF21-Fruits der Ziele, die durch das umliegende Radar (R2) verursacht werden, mit jedem der Fruits vom Typ DF11 der anderen Ziele der zwei Unterbereiche des erweiterten Radarabdeckungsbereichs (zone_D1, zone_D2), die von dem umliegenden Radar (R2) hervorgerufen werden, erhalten wird, wobei die Position jedes der anderen Ziele im Azimut bekannt ist.

2. Verfahren nach Anspruch 1, **dadurch gekennzeichnet, dass** eine präzise Entfernungs- und Azimut-Ortung eines Ziels durch Positionieren von selektiven UF4- oder UF5-Abfragen (131, SE7) in dem azimutalen Vorortungsbereich des Ziels, der einem Hörfenster für die Antwort zugeordnet ist, unter Berücksichtigung der Unsicherheit bezüglich der Entfernung des Ziels, die auf Grundlage der Leistung der Fruits dieses Ziels und der Merkmale des Radars geschätzt wird, erhalten wird, wobei die selektiven Abfragen während der "Roll Call"-Periode oder während der "All Call"-Periode zusätzlich zur Mode-S- "All Call"-UF11-Abfrage an das Ziel gesendet werden.

3. Verfahren nach einem der vorstehenden Ansprüche, **dadurch gekennzeichnet, dass**, da das Radar allgemeine Anrufen, sogenannte UF11, sendet, in dem ersten Schritt (31, SE2) in Reaktion auf die allgemeinen UF11-Anrufen des Radars das Abhören der synchronen DF11-Antworten nach der "All Call"-Periode und während der "Roll Call"-Periode zusätzliche synchrone Antworten (110) in dem erweiterten Radarabdeckungsbereich (42) liefert, wobei die so erhaltenen zusätzlichen Antworten wie die anderen synchronen Antworten in der "All Call"-Periode behandelt werden, um DF11-Plots zu konstruieren, die die Attribute eines herkömmlichen Mode-S-Plots aufweisen.

4. Sekundärradar, **dadurch gekennzeichnet, dass** es so konfiguriert ist, dass es das Verfahren nach einem der vorstehenden Ansprüche durchführt.

5. Radar nach Anspruch 4, **dadurch gekennzeichnet, dass** es Abhörperioden umfasst, die von dem Radar gesendeten Abfragen zugeordnet sind, Mittel (21) zur permanenten Verarbeitung der asynchronen Mode-S-Antworten unabhängig von den Abhörperioden umfasst.

6. Radar nach Anspruch 5, **dadurch gekennzeichnet, dass**, da das Radar eine Antenne (1) umfasst, die Antennendiagramme (11, 12, 14, 15) aufweist, die Verarbeitungsmittel die Erkennung und das Decodieren der asynchronen Antworten unter getrennter Verwendung der Antennendiagramme des Radars vornimmt:
- um alle über die Antenne empfangenen asynchronen und synchronen Antworten zu erkennen;
- um die Antworten jedes Typs, die Daten der Nachrichten zu decodieren und aus diesen die Mode-S-Adresse zu extrahieren;
- um jede decodierte Antwort mit ihren Merkmalen anzureichern, wobei die Merkmale mindestens der Erkennungszeitpunkt, der Azimut der Hauptkeule der Antenne bei der Erkennung und die Empfangsleistung in den Antennendiagrammen sind.

7. Radar nach einem der Ansprüche 4 bis 6, **dadurch gekennzeichnet, dass** es einen Extraktor (22) für DF11-Plots in dem erweiterten Abdeckungsbereich (42) umfasst, wobei die Extraktion von DF11-Plots außerhalb der Betriebsreichweite des Radars nur erfolgt, um Ziele anhand ihrer Mode-S-Adresse zu orten und zu identifizieren.

8. Radar nach einem der Ansprüche 4 bis 7, **dadurch gekennzeichnet, dass** es Verarbeitungsmittel (23) umfasst, um die II//SI-Code-Konflikte zu erkennen und von dem umliegenden Radar in dem II/SI-Code-Konfliktbereich anvisierte Ziele zu erkennen und zu orten, wobei die Mittel (23) Folgendes durchführen:
- die Zuordnung der Fruits zu den synchronen Plots;
- die geografische Analyse der Quellen von DF11-Fruits, bei denen es sich um asynchrone Antworten handelt, deren Quelle ein umliegendes Radar (R2) ist;
- die Isolierung des Vorhandenseins von nicht durch das Radar erkannten Zielen in dem Konfliktbereich;
- die Auswertung der azimutalen Vorortung der Ziele gegenüber dem Radar in dem Konfliktbereich;
- die Erkennung und Ortung der Ziele in Entfernung und Azimut, damit das Radar seine Überwachungsfunktion wie bei allen anderen Zielen fortsetzt.

## Claims

1. Method for detecting conflicts in the ll/SI identification code of radars near a secondary mode-S radar (R1), **characterized by** comprising at least:
- a first step (31) in which:
- the coverage of said radar (R1) is extended (SE2) to obtain synchronized replies in an extended radar coverage;
- said radar (R1) detects (SE1) unsolicited unsynchronized replies, named fruits, in a region (42) of extended radar coverage;
- the fruits are associated with the mode-S targets of said extended radar coverage (SE3), the position of said fruits being determined by interpolation with the synchronized detections of said targets, on the basis of their mode-S address;
- a second step (32) in which said radar (R1) detects a conflict in II/SI code by analyzing geographic regions of radar coverage (A, B, C, D1 and D2) common to said radar (R1) and to at least one nearby radar (R2), a conflict being detected if said radar (R1):
- detects (141) the presence of DF11 fruits of the same ll/Sl code as said radar (R1), having as source said nearby radar (R2), in two sub-regions of said extended radar coverage (region_D1, region_D2),;
- observes (142) the absence of DF11 fruits caused by said nearby radar (R2) in that region of radar coverage of said radar (R1) which does not overlap with the region of radar coverage of said nearby radar (region A);
- observes the absence of a synchronous DF11 reply to a UF11 all-call interrogation from the radar (R1) by aircraft leaving the region of radar coverage of said radar;
the region of overlap (region_B) in the radar coverage of said radar (R1) and the radar coverage of said nearby radar (R2) forming a region of conflict in ll/Sl code; and
- a third step (33) in which said radar (R1) detects (SE5) targets locked by said nearby radar (R2) in said region of conflict (region_B, region_C) on the basis of detection (143) of DF4, DF5, DF20 or DF21 fruits caused by said nearby radar (R2) in said region of conflict (region_B, region_C), indicating the presence of a target in said region of conflict; said detection being performed by analyzing, over several passes, the DF4, DF5, DF20, or DF21 fruits, for which the time difference is nearly constant with respect to the DF11 fruits of the targets in the two sub-regions of said extended radar coverage (region_D1, region_D2), taking into account the movement of these targets; and said targets being pre-located (SE6) in an azimuthal region inside said region of conflict (region_B, region_C) by exploiting the absolute value of the time difference between each of its DF4, DF5, DF20 or DF21 fruits of said targets due to said nearby radar (R2) and each of the DF11 fruits of the other targets of the two sub-regions of said region of extended radar coverage (region_D1, region_D2) that are caused by said nearby radar (R2), the azimuthal position of each of said other targets being known.

2. Method according to claim 1, **characterized in that** a precise distancewise and azimuthal location of a target is obtained by positioning selective UF4 or UF5 interrogations (131, SE7) in said pre-location azimuthal region of said target, associated with a listening window, in which the reply is listened for, taking into account the uncertainty in the distance of said target, which is estimated on the basis of the power of the fruits of this target and of the characteristics of the radar, said selective interrogations being transmitted to said target during the roll-call period, or during the all-call period, in addition to the UF11 all-call mode-S interrogation.

3. Method according to any one of the preceding claims, **characterized in that**, said radar transmitting so-called UF11 all-call interrogations, in said first step (31, SE2), in response to said UF11 all-call interrogations of said radar, listening for synchronized DF11 replies after the all-call period and during the roll-call period provides additional synchronized replies (110) in said region of extended radar coverage (42), said additional replies thus obtained being processed as the other synchronized replies in the all-call period to construct DF11 hits having the attributes of a conventional mode-S hit.

4. Secondary radar, **characterized in that** it is configured to implement the method according to any one of the preceding claims.

5. Radar according to claim 4, **characterized in that**, comprising listening periods associated with interrogations transmitted by said radar, it comprises means (21) for continuously processing the unsynchronized mode-S replies, independently of said listening periods.

6. Radar according to claim 5, **characterized in that**, said radar comprising an antenna (1) having antenna radiation patterns (11, 12, 14, 15), said processing means detect and decode said unsynchronized replies by exploiting said radiation patterns of the antenna of said radar separately:
- to detect all the, unsynchronized and synchronized, replies received via said antenna;
- to decode replies of any type, the data of the messages and to extract the mode-S address therefrom;
- to enrich each decoded reply with its characteristics, said characteristics being at least the detection time, the azimuth of the main lobe of the antenna on detection and the power received through the antenna radiation patterns.

7. Radar according to any one of claims 4 to 6, **characterized by** comprising an extractor (22) of DF11 hits in said region of extended coverage (42), DF11 hits being extracted beyond the operational range of said radar solely with a view to location and identification of the targets via their mode-S address.

8. Radar according to any one of claims 4 to 7, **characterized in that** it comprises processing means (23) for detecting conflicts in II/SI codes and for detecting and locating targets locked by said nearby radar in any regions of conflict in II/SI code, said means (23):
- associating fruits with synchronized hits;
- geographically analyzing the sources of DF11 fruits that are unsynchronized replies the cause of which is a nearby radar (R2);
- isolating the presence of targets not detected by said radar in said region of conflict;
- evaluating the azimuthal pre-location of said targets with respect to said radar in said region of conflict;
- detecting and locating said targets distancewise and azimuthally in order to allow said radar to continue its surveillance function as for all the other targets.
